(19) Europäisches Patentamt
European Patent Office
Office européen des brevets

(11) **EP 2 369 509 A1**

(12) **EUROPEAN PATENT APPLICATION**

(43) Date of publication:
28.09.2011 Bulletin 2011/39

(51) Int Cl.:
*G06F 17/50* (2006.01)　　　*H03K 19/00* (2006.01)

(21) Application number: 10155091.1

(22) Date of filing: 01.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: NXP B.V.
5656 AG Eindhoven (NL)

(72) Inventor: Groot, Cas
Redhill, Surrey RH1 1DL (GB)

(74) Representative: Schouten, Marcus Maria et al
NXP B.V.
IP & Licensing Department
High Tech Campus 60
5656 AG Eindhoven (NL)

(54) **Method of generating an integrated circuit layout and integrated circuit**

(57) Disclosed is a computer-implemented method of generating an integrated circuit layout comprising a plurality of power domains (40) connected to a power supply (10) via respective arrangements (30) of power gating switch segments (32), comprising determining the maximum current delivery capacity of the power supply (10); determining the maximum number of power domains (40) concurrently active during operation of the integrated circuit; and for a selected power domain (40), generating the layout of a power gating switch arrangement (30) as a function of the determined maximum current delivery capacity of the power supply (10) and the maximum number of concurrently active power domains (40). An IC designed in accordance with this method is also disclosed. The method and IC of the present invention ensure a minimized wake-up time for a powered down power domain without jeopardizing the integrity of the power supply.

FIG. 1

**Description**

FIELD OF THE INVENTION

The present invention relates to a computer-implemented method of generating an integrated circuit layout comprising a plurality of power domains connected to a power supply via respective arrangements of power gating switch segments.

The present invention further relates to an integrated circuit designed in accordance with such a method.

BACKGROUND OF THE INVENTION

Nowadays, many integrated circuits (ICs) are designed to perform a wide variety of computational tasks. To this end, such an IC may comprise a plurality of different circuit portions, e.g. cores, each designed to perform one of said computational tasks. An example of such a multi-tasking IC design is the system-on-chip concept. Usually, such ICs perform only a subset of the computational tasks at the same time, which means that the other circuit portions do not perform any tasks. To avoid unnecessary power consumption by such idle circuit portions due to leakage currents, these circuit portions are temporarily disconnected from the power supply until their functionality is required again, such that the leakage current of the overall circuit is reduced. Such circuit portions are sometimes also referred to as power domains.

In order to maximize reduction in leakage current, it may be necessary to provide a fine granularity of the power domains. This however typically leads to numerous domains, and turning on/off these power domains by a dedicated power supply or external source is undesired as it introduces a large overhead in area and power. This overhead is caused by the dedicated power supplies, which have no 100% efficiency and consume a considerable amount of area. To overcome the overhead, power domains can be turned on and off by means of power switch arrangements that share a common power supply. A power switch can be seen as a digital switch connecting the power domain with a power supply if active operation of the power domain is required, and disconnecting the power domain if it is to be brought into a standby mode. To this end, the control terminal(s) of the power switch arrangement may be responsive to a digital control signal, e.g. a sleep signal. Disconnecting the power domain from the power supply ensures that its leakage path has been cut-off.

The power switch has to be turned on first if a power gated domain needs to change from standby to active, e.g. by setting the aforementioned digital control signal to its appropriate value. This will charge the power domain back to the typical supply voltage $V_{DD}$ required for normal operation. If the power-gated domain consumes a large current during active mode, a relatively large area power switch is required to ensure a minimum voltage drop across the power switch to prevent performance degradation of the power domain. A common way to create a large power switch is to use an array of power switches segments that may be organized as multiple daisy-chained segments. A chain of delay elements for providing multiple delayed versions of the wake-up signal is also provided, with all but the first segment having its control terminal connected to an output of a delay stage of the delay chain.

However, prior art power switch arrangements suffer from a number of problems. If large power switch segments are used, which typically have a relatively small equivalent resistance, the wake-up time of the associated power domain is short, but its inrush current is large. An excessive inrush current can result in the supply voltage supplied by the power supply that is shared by multiple power domains, to collapse due to the excessive peak current consumption. This voltage drop can lead to incorrect operation of active power domains, or, even state loss in registers or other memory elements in the power domains that were already active.

Small power switch segments are typically used to prevent such excessive inrush currents. However, in order to achieve a sufficiently low equivalent resistance of the power switch arrangement, long power gating switch segment chains are required. This typically leads to a large wake-up time for the associated power domain, which is also undesired.

A. Calimera et al. in the Proc. DATE conference 2008, pages 973-980 disclose a method of designing a power gating transistor arrangement based on the maximum inrush current of the associated power domain. The maximum inrush current is based on the upper boundary of the maximum current the power domain will consume during active mode. A parallel sleep transistor arrangement is proposed between the power domain and ground in which the effective width of individual sleep transistors is modulated as a function of the voltage of the virtual voltage rail of the power domain for the purpose of maintaining the discharge current of the power domain as constant as possible, as it has been recognized in this paper that such a constant current is the fastest way of (dis)charging the capacitance of the power domain.

However, the actual current during the reactivation period of the power domain still exhibits substantial variations. More importantly, activation of the power gating transistor arrangement designed by Calimera et al. can still cause a voltage drop if too many power domains are active at the same time.

SUMMARY OF THE INVENTION

The present invention seeks to provide a computer-implemented method of generating an integrated circuit layout comprising a plurality of power domains connected to a power supply via respective arrangements of power gating switch segments in which the occurrence of such a voltage drop can be avoided.

The present invention further seeks to provide an IC designed by the method of the present invention.

According to an aspect of the present invention, there is provided a computer-implemented method of generating an integrated circuit layout comprising a plurality of power domains connected to a power supply via respective arrangements of power gating switch segments, comprising determining the maximum current delivery capacity of the power supply; determining the maximum number of power domains concurrently active during operation of the integrated circuit; and for a selected power domain, generating the layout of a power gating switch arrangement as a function of the determined maximum current delivery capacity of the power supply and the maximum number of concurrently active power domains.

The present invention is based on the insight that following design of the IC, the known specification of the power supply can be used to define the available current for a starting up power domain when factoring in the power domains that expected to be active during said power up period. This information can be used to design the power gating switch arrangement in such a manner that start-up latency is minimized whilst ensuring that the power supply to the remaining power domains is not compromised.

In a preferred embodiment, the step of generating the layout of the power gating switch arrangement comprises determining the maximum inrush current available to the selected power domain during its wake-up period, and designing the power gating switch arrangement such that the inrush current has a substantially constant value during said wake-up period, as such a substantially constant value, i.e. a current profile having a rectangular-like shape during the start-up period of the power domain, ensures an optimal charging of the power domain capacitance in terms of efficiency.

Preferably, the duration of said wake-up period is minimized as a function of the maximum available inrush current and the overall capacity of the selected power domain to ensure that the power domain becomes active as quickly as possible.

In case of a scenario in which multiple power domains may woken up at the same time, an embodiment of the method may comprise determining the number of power domains that are simultaneously switched to an active state; determining a fraction of the maximum available inrush current by dividing the maximum available inrush current by said number of power domains; and designing the respective power gating switch arrangements based on said fraction.

In an advantageous embodiment, said arrangement comprises an array of N power gating switch segments arranged in parallel between a supply line connected to the power supply and an internal supply line of the selected power domain, and at least one chain of delay elements, each gating switch segment in said array having its control terminal connected to an output of a different one of said delay elements; and the step of optimizing the layout of said arrangement comprises calculating the value of integer N.

In case of such an arrangement comprising a single chain of delay elements only, said arrangement may comprise an array of N power gating switch segments arranged in parallel between a supply line connected to the power supply and an internal supply line of the selected power domain, and a chain of N-1 delay elements, the $M^{th}$ gating switch in said array having its control terminal connected to the M-1$^{th}$ delay element, with M being a positive integer with $M \leq N$; and the step of optimizing the layout of said arrangement comprises calculating the value of integer N. It has been found that such arrangements are particularly suitable for ensuring that the current profile during the start-up period has a rectangular-like shape.

To this end, the method of the present invention may comprise calculating the value of integer N as a function of the wake-up time and the delay introduced by a single one of said delay elements. In addition, the method of the present invention may further comprise estimating the equivalent resistance of each of the N power gating switch segments; and determining the dimensions of said arrangement from said estimated equivalent resistances to ensure that such a rectangular-like current profile shape is achieved.

In an embodiment, the step of determining the dimensions of said arrangement comprises determining the individual dimensions of each of the N power gating switch segments from their respective equivalent resistances. By optimization of the individual power gating switch segments, the required rectangular-like current profile shape is more easily achieved.

The maximum inrush current may be determined from the design specification of the power supply. Alternatively, the step of determining the maximum inrush current may comprise calculating said inrush current as a function of the minimum required voltage for ensuring data retention in the selected power domain and the Thévenin equivalent output resistance of the power supply. This has the advantage that a more accurate estimate of the available maximum inrush current can be obtained.

The maximum number of power domains concurrently active during operation of the integrated circuit may be simply determined by assuming that all but the power domain to be powered up are active during said power up. This however may be an overly cautious estimate, as most ICs do not comprise operation modes in which all power domains are active at the same time. Alternatively, the number of power domains concurrently active during operation of the integrated circuit may be determined by providing a plurality of operation scenarios for said integrated circuit, each scenario identifying the power domains active in said scenario, wherein the step of determining the maximum number of power domains concurrently active during operation of the integrated circuit comprises selecting the scenarios in which the selected power domain is identified as active; and identifying the selected scenario having the highest number of active power domains. This has the advantage that a more accurate estimate, i.e. a higher estimate, of the maximum available inrush current can be obtained, thus improving the power-up characteristics of the selected power domain.

The method of the present invention distinguishes itself from conventional synthesis methods in that not all circuit blocks are being selected from circuit block libraries that define a particular semiconductor technology. In a preferred embodiment, when converting a functional specification of the integrated circuit into said layout, said converting comprises converting the functional specification of the power domains and the power supply into said layout using predetermined library cells; and generating the layout of the arrangement of power gating switch segments using cells of which the layout is generated on-the-fly.

Hence, the power gating block of the power domain to be gated is designed without using standard library cells, such that the layout of the various elements, and in particular the power gating switch segments, can be truly optimized. It is noted that when selecting a power gating switch from a predefined library, it is of course possible to select the best-fit switch from the library, but the layout of this switch will more likely than not be sub-optimal when taking the maximum available inrush current of the power domain into consideration.

It is noted that methods for designing a power gating switch layout on the fly are known per se, such as for instance disclosed in PCT application WO2009/144658 A1. The teachings of the present invention may be advantageously combined with the teachings of this PCT application.

In accordance with another aspect of the present invention, the aforementioned embodiments of the method of the present invention may be implemented as computer program code means for execution on a processor of a computer. To this end, the computer program code means may be made available on any suitable computer-readable medium, such as a CD-ROM, DVD, memory stick or network device such as an Internet-accessible server.

In accordance with yet another aspect of the present invention, there is provided an integrated circuit comprising a power supply and a plurality of power domains, at least some of the power domains comprising an arrangement of power gating switch segments connecting its power domain to the power supply, said arrangement being characterized in that during a power-up mode of its power domain, said power domain draws a substantially constant current from the power supply. Hence, the provision of an integrated circuit having a layout designed in accordance with an embodiment of the method of the present invention yields an IC having improved power domain start-up characteristics compared to prior art ICs.

Preferably, the arrangement of power gating switch segments comprises an array of N power gating switch segments arranged in parallel between a supply line connected to the power supply and an internal supply line of the selected power domain; and a chain of N-1 delay elements, the $M^{th}$ gating switch in said array having its control terminal connected to the M-1$^{th}$ delay element, with M being a positive integer with M≤N, as this arrangement is particularly suitable for providing the power domain with a substantially constant current from the power supply during its start-up.

More preferably, the power gating switch segments in said array have different sizes, as this facilitates a further reduction in current variations during power domain start-up.

The IC of the present invention may be integrated into an electronic device. In particular, electronic devices that are powered by a finite power source, e.g. one or more batteries, will benefit from the presence of the IC of the present invention as such electronic devices will be able to temporarily switch off certain functions to preserve energy whilst at the same time being able to restore such functions as quickly as possible without jeopardizing the reliability of the power supply.

BRIEF DESCRIPTION OF THE EMBODIMENTS

Embodiments of the invention are described in more detail and by way of non-limiting examples with reference to the accompanying drawings, wherein

FIG. 1 schematically depicts an IC comprising multiple power domains;
FIG. 2 schematically depicts the impact of the different power gating switch arrangements on the inrush current of a power domain during its start-up;
FIG. 3 schematically depicts the simulation results of the current and voltage behavior of a power domain during its start-up using the power gating switch arrangements of FIG. 2;
FIG. 4 depicts a flowchart of an embodiment of the method of the present invention;
FIG. 5 schematically depicts the current and voltage start-up behavior of a power domain connected to a supply line through an exemplary power gating switch arrangement designed with an embodiment of the method of the present invention;

FIG. 6 schematically depicts the current and voltage start-up behavior of a power domain connected to a supply line through an exemplary power gating switch arrangement designed with another embodiment of the method of the present invention;

FIG. 7 schematically depicts a number of non-limiting examples of power gating switch arrangements including a power gating switch arrangement designed with the method of the present invention; and

FIG. 8 schematically depicts an IC comprising a power-gated power domain designed in accordance with an embodiment of the method of the present invention.

DETAILED DESCRIPTION OF THE DRAWINGS

It should be understood that the Figures are merely schematic and are not drawn to scale. It should also be understood that the same reference numerals are used throughout the Figures to indicate the same or similar parts.

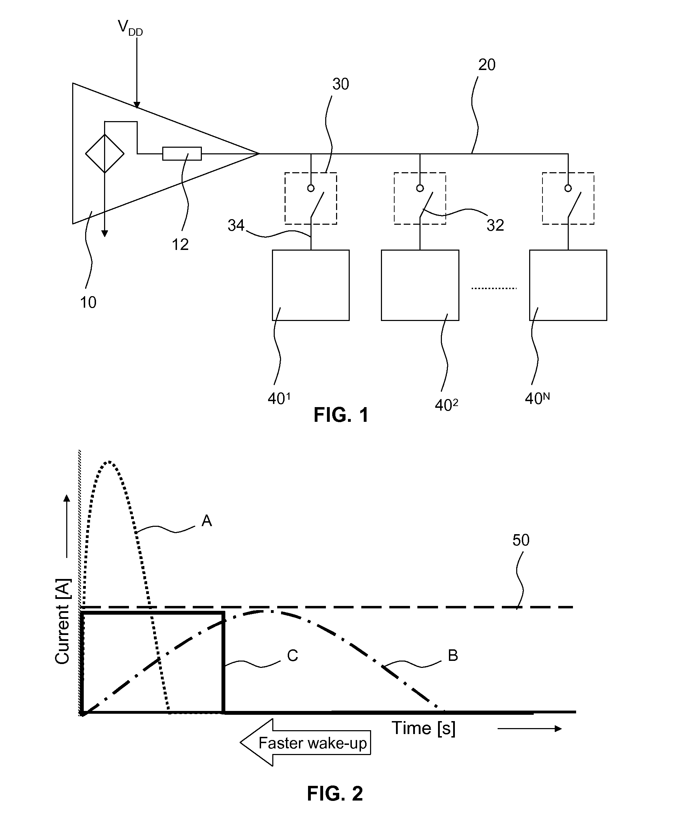

FIG. 1 schematically depicts an IC comprising a plurality of power domains 40, here shown as N power domains labeled $40^1$-$40^N$, with N being a positive integer. The virtual supply line 34 of each of the power domains 40 is connected to a supply line 20 through a power gating switch arrangement 30, which may contain one or more power gating switch segments 32. In the context of the present invention, a power gating switch is a block comprising one or more power gating switch segments e.g. power gating transistors, and optionally one or more drivers for the respective switches, wherein the one or more switches are simultaneously active or inactive.

The supply line 20 is connected to a power supply 10, from hereon referred to as a PMU (power mode unit) 10, which has a Thévenin equivalent output resistance 12, the relevance of which will be explained in more detail later.

In operation, the PMU 10 provides the N power domains 40 with a supply current. Assuming that power domain $40^1$ has been switched off and is reactivated, the power gating switch arrangement 30 of the power domain $40^1$ will be switched to a conductive state, using an appropriate control signal (not shown). During wake-up of a power domain 40, the power consumption of the power domain 40 is increased beyond its normal active mode power consumption, which translates into an increased current being drawn from the PMU 10. If the sum of this peak current and the simultaneously drawn combined current demands of the already active power domains 40 exceed the capacity of the PMU 10, a collapse in the power supply, causing a drop in the supply voltage may occur. This drop can cause state retaining elements in the power domains 40 such as register and memory cells to inadvertently change state, thus introducing errors in the operation of the IC.

The present invention seeks to prevent the occurrence of such power supply collapse. As already has been recognized in the prior art, the design of the power gating switch arrangement 30 has an impact on the start-up time and the current drawn by the power domain 40 to be powered up. This is further explained with the aid of FIG. 2, which depicts the current profiles of the IC of FIG. 1 for three different power gating switch arrangements as a function of start-up time of the power domain $40^1$.

Profile A shows the current consumption of the IC for a power gating switch arrangement 30 comprising a single power gating segment. As the single segment has to be able to cope with the current demands of the power domain $40^1$ when active, the equivalent resistance of the single segment must be relatively small. Although this leads to the desirable fast reactivation of the power domain $40^1$, the unwanted consequence of this design requirement for the single power gating transistor is that the peak current drawn from the PMU 10 can exceed its maximum capacity indicated by threshold 50, thus potentially leading to the unwanted collapse of the power supply in the time period where profile A exceeds the threshold 50.

This may be prevented by providing a power gating switch arrangement 30 in which multiple identical power gating segments are connected in parallel between the supply line 20 and the virtual supply line 34 of a power domain 40, with the respective power gating segments being sequentially activated such that the equivalent resistance of the power gating switch arrangement 30 is incrementally decreased. This may yield the current consumption profile B. The benefit of this approach is that the integrity of the IC performance is safeguarded, but has the drawback that the start-up time of the power domain $40^1$ is significantly increased compared to profile A.

An ideal current consumption profile is shown as profile C. Current profile C, which ideally has a rectangular shape, maximizes the power consumption of the IC during the reactivation of power domain $40^1$ without exceeding the threshold 50, i.e. the maximum capacity of the PMU 10, as this provides the minimum required start-up time for the power domain $40^1$ without jeopardizing the integrity of the PMU 10.

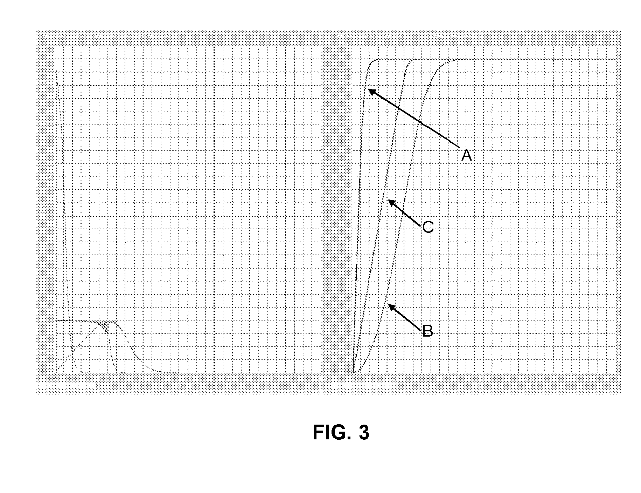

The effect of the profiles A-C on the voltage on the virtual supply line 34 of the is shown in the right panel of FIG. 3 (the left panel once more shows current profiles A-C already shown in FIG. 2). As can be seen, profile A achieves the fastest ramp-up of the supply voltage (here 1.2 V) but at the cost of potential supply voltage drops as previously explained. Profile C achieves the theoretically fastest voltage ramp-up without such risks.

The present invention seeks to provide an automated IC design methodology in which the layout of the power gating switch arrangement 30 is designed as a function of the capacity of the PMU 10, such that the power gating switch arrangement 30 generates a current profile during start-up of its associated power domain 40 that is substantially rectangular-shaped, i.e. resembles profile C as closely as possible. In the context of the present invention, a rectangularly shaped current profile is a current profile having a constant current for all of the start-up time of a power domain 40 apart from the ramp-up and ramp-down of the current, and apart from some minor modulations on the horizontal part of the current profile, as will be explained in more detail later. Preferably, the current profile generated by a the power gating switch arrangement 30 during start-up of its associated power domain 40 facilitates a substantially constant current consumption showing less than 20% variation, more preferably less than 10% variation during the start-up period of its power domain 40, and does not exceed threshold 50.

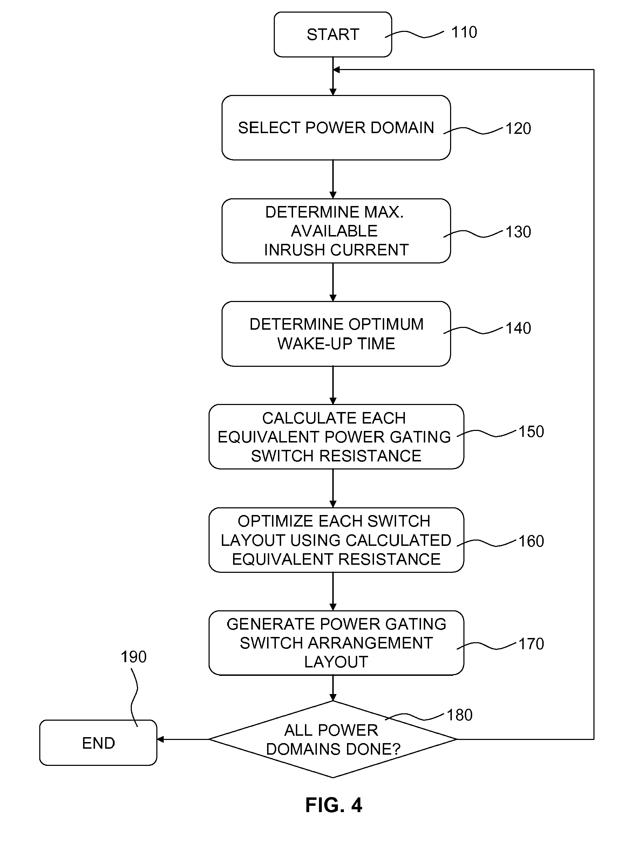

A preferred embodiment of the method of the present invention is shown in FIG. 4, which after starting the method in step 110 proceeds to step 120 in which a power domain is selected for which the power gating switch arrangement 30 is to be designed. In step 130, the maximum available inrush current for the selected power domain 40 is determined. The maximum available inrush current can be calculated in two ways, namely by:

1. using the maximum defined current of the PMU 10, e.g. as defined in its datasheets or
2. using the output resistance 12 of the PMU 10 in combination with the known minimum required supply specifications of the PMU 10.

To calculate the maximum available inrush current using the first approach, the supply voltage $V_{DD}$ for all power domains 40, will always be above a specified value. The maximum current delivery capacity of the PMU 10 and its corresponding minimum worst-case value is usually specified in the PMU documentation. From this, the available inrush current can be calculated by the following formula:

$$I_{inrush} = I_{PMU} - \sum_{\forall x \in \text{Active Power domains}} I_{Active}(x) \tag{1}$$

where $I_{inrush}$ is the maximum inrush current, $I_{PMU}$ is the maximum current load of the PMU, and $I_{active}(x)$ is the active current of power domain x.

The subset of active power domains 40 determines the maximum inrush current available to be consumed for waking up the selected inactive power domain. The selected power domain will be referred to as power domain $40^1$ by way of non-limiting example only.

As will be apparent, in the worst-case scenario all power domains $40^2$-$40^N$ are active while only power domain $40^1$ is inactive and about to be reactivated. However, for modern ICs such as systems-on-chip (SoC's) having multiple power domains 40, it is common design practice to define different power states, which may be seen as the different use cases of the IC. Such a power state describes which power domains 40 are active and inactive during the power state.

In an embodiment of the present invention, the power state information may be used to determine the effective number of active power domains 40 when calculating the maximum available inrush current. This has the advantage that more inrush current will be considered available for powering up selected inactive power domain $40^1$ compared to the worst case scenario, i.e. assuming that all except one power domain 40 is active when reactivating the selected power domain.

As explained above, the maximum inrush current available to power up the selected power domain $40^1$ can be defined using the design specifications of the PMU 10. However, if the Thévenin equivalent output resistance 12 of the PMU 10 is known and the minimum supply voltage to maintain register and memory states of the already active power domains 40 is also known, i.e. the minimum, voltage required to retain such states, the inrush current can be estimated in accordance with an alternative embodiment of the present invention by the following formula:

$$I_{inrush} = \frac{V_{DD} - V_{min}}{R_{Out\_PMU}} - \sum_{\forall x \in \text{Active Power domains}} I_{Active}(x) \tag{2}$$

where $I_{inrush}$ is the maximum inrush current, $V_{DD}$ is the supply voltage, $V_{min}$ is the minimum voltage required to maintain desired operation of the whole system, and $R_{out\_PMU}$ is the output resistance 12 of the PMU 10.

After having determined the maximum available inrush current, the method proceeds to step 140 in which the optimum wake-up time of the selected power domain 40[1] is calculated. To be able to calculate the optimum wake-up time of a selected power domain 40[1], a number of constraints need to be clarified. These constraints include the power domain model and power domain typical supply voltage. In the present invention, it is assumed that the power domain equivalent models parameters are known to the IC designer. For instance, a large set of digital cells in, e.g. a power domain can be modeled by means of a capacitor and resistor. The capacitor represents the sum of all gate capacitances and the decoupling (decap) capacitance. The resistor represents the equivalent leakage of the selected power domain 40[1]. Following the calculation of the maximum inrush current available to the selected power domain 40[1], the optimum wake-up time can be expressed by the following formula:

$$t_{wake-up} = \frac{C_{load}}{I_{inrush}} V_{DD} \qquad (3)$$

where $t_{wake-up}$ is the optimum, i.e. minimal, wake-up time of the selected power domain 40[1], $C_{load}$ is the equivalent capacitive load of the selected power domain 40[1], $I_{inrush}$ is the maximum inrush current available as calculated in step 130, and $V_{DD}$ is the supply voltage. The thus calculated optimum wake-up time assumes that the current drawn from the PMU 10 to power up the selected power domain 40[1] is (substantially) constant and equal to the maximum inrush current for the whole wake-up period, i.e. exhibits current profile C as shown in FIG. 2.

After calculation of the optimum (minimal) wake-up time, the method proceeds to step 150 in which the required resistance of the power gating switch arrangement 30 is calculated. Preferably, this step includes determining the required number of power gating switch segments 32 and calculating the individual equivalent resistance of each of the required power gating switch segments 32, as will be explained in more detail below.

At this point it should be noted that the present invention targets the provision of a substantially constant current to a selected power domain 40[1], which is a fundamentally different approach than the aforementioned prior art approaches in which the equivalent capacitor $C_{load}$ of a power domain to be reactivated is charged with a current profile similar to an exponential or parabola like function, e.g. current profile A or B. This has a significant impact on the design of the power gating switch arrangement 30, as will now be explained in more detail.

Since a constant current is applied to the power domain's equivalent capacitor $C_{load}$ the voltage will rise linear as shown in the following formula:

$$V_C = \frac{q(t)}{C} = \int_{t_0}^{t} \frac{i(t')}{C} dt' + V_0 \qquad (4)$$

where $V_C$ is the capacitor voltage, $q(t)$ is the charge at time t, C is the power domain's equivalent capacitance, $i(t')$ is the current at time $t'$, and $V_0$ is the initial capacitor's voltage at time $t=0$. If this integral is solved it will lead to the following formula if $t_0$ and $V_0$ are equal to zero:

$$V_C = \frac{i \cdot t}{C} \qquad (5)$$

It will be appreciated that creating such a constant current using power switch segments only is not possible. Therefore, the present invention aims to achieve the provision of a constant current through a power gating switch arrangement 30 by using purposively sized power gating switch segments 32, with a delay element between each segment.

In an embodiment, the delay element may be selected from a standard library, such that the delay provided by the delay element is well-defined. Any delay element suitable for use in the technology and voltage domain of interest may be selected for this purpose.

Consequently, the required number of power gating switch segments 32 may be calculated by the following formula:

$$N_{segments} = \frac{t_{wake-up}}{t_{delay-element}} \qquad (6)$$

where $N_{segments}$ is the number of power gating switch segments 32 and $t_{delay-element}$ is the delay time of the selected delay element.

As can be seen from Formula (6), the delay element time determines the number of gating switch segments 32 in the gating switch arrangement 30. For delay elements having a relatively short delay time, a larger number of gating switch segments 32 and delay elements is required, which is detrimental in terms of area overhead, but has the advantage that the wake-up current profile of its associated power domain 40 will more accurately resemble a rectangular shape.

For delay elements having a relatively long delay time, a smaller number of gating switch segments 32 and delay elements is required, which is advantageous in terms of area overhead, but has the drawback that the wake-up current profile of its associated power domain 40 will less accurately resemble a rectangular shape, thereby increasing the wake-up time as the available current is not used optimally.

Using the above information, the equivalent resistance of each individual power gating switch segment 32 of the power gating switch arrangement 30 may be estimated using the following steps.

In the first step, the equivalent resistance of the first individual power gating switch segment 32 is calculated by the following formula:

$$R_{segment}[1] = \frac{V_{DD}}{I_{inrush}} \qquad (7)$$

where $R_{segment}[1]$ is the first power gating switch segment equivalent resistance.

In a next step, the voltage drop over a fully enabled individual power gating switch segment 32 is calculated using the following formula:

$$\Delta V = V_{DD}\, e^{\frac{-t_{delay-element}}{C_{load}\, R_{segment}[1]}} \qquad (8)$$

where $\Delta V$ is the voltage drop over the fully enabled individual power gating switch segment 32.

By assuming that the voltage level on the virtual power line 34 will linearly increase by the voltage difference $\Delta V$ for every step, i.e. for every subsequently enabled power gating switch segment 32, the respective equivalent resistances of the remaining power gating switch segments 32 of the power gating switch arrangement 30 may be calculated by the following pseudo-code:

```
for i = 2:Nsegments
    V_tmp = Vdd-(i-1)*ΔV;
    R_tmp = 0;
    for j = 1:(i-1)
        R_tmp = R_tmp + 1/Rsegment(j);
    end
    R_tmp = 1/R_tmp;
    Rsegment(i) = 1/(1/(V_tmp/Iinrush)-1/R_tmp);
end
```

in which i and j are positive integers. The above pseudo-code is able to calculate the equivalent resistance of each of the N power gating switch segments 32 by calculating the voltage difference between the supply and the capacitor V_tmp. The new total resistance can be calculated by dividing V_tmp by the maximum inrush current. Finally, the new power gating switch segment 32 resistance can be expressed by subtracting the inverse of the previous total resistance from the inverse of the new total resistance and taking the inverse of the result.

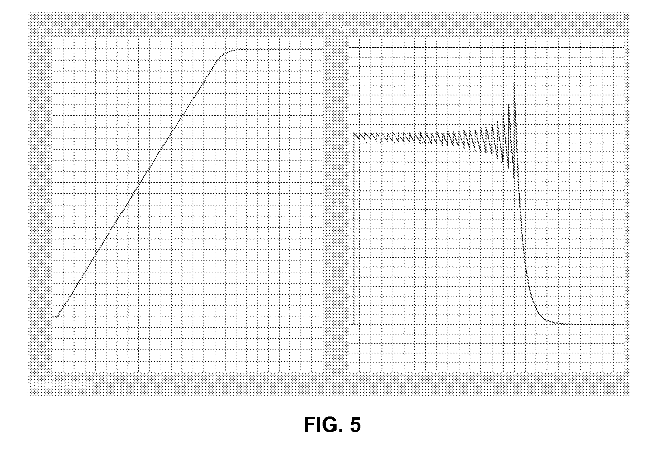

FIG. 5 depicts a simulation of the current characteristics of a power gating switch arrangement designed in accordance with the aforementioned steps of the method of the present invention, in which the individual equivalent resistances of the suitable power gating switch segments 32 have been calculated. As can be seen from this simulation, the thus obtained power gating switch arrangement 30 achieves a substantially rectangular shape current profile (right panel) and a linearly increasing voltage on the virtual supply rail 34 of the power domain 40[1].

In this simulation, a maximum available inrush current of 4mA, a supply voltage of 1.2V, and an equivalent core capacitance of 10nF have been used. Applying the method of the present invention leads to an optimum wake-up time of 3μs. The delay time, $t_{delay-element}$, between the power gating switch segments 32 is set at 100ns, thus leading to a obtained power gating switch arrangement 30 comprising thirty power gating switch segments 32.

It will be apparent from FIG. 5 that the build-up of a slight deviation (modulation) is present in the current profile of the designed power gating switch arrangement 30. This is caused by the assumption that the voltage on the virtual supply line 34 of the power domain 40 will increase in an exactly linear fashion over the whole start-up period of the power domain 40.

It is however possible to reduce the magnitude of this modulation by optimizing the design (layout) of each of the power gating switch segments 32. This is shown as step 160 in FIG. 4.

In an embodiment, the calculated equivalent resistances of the individual power gating switch segments 32 are used to determine the width (W) and length (L) dimensions of these switches before actually building the IC. This may be achieved using any suitable design tool, e.g. by using an analog simulator and optimizer to obtain the optimal dimensions of the respective power gating switch segments 32.

For instance, the translation from a resistance value to the correct W/L dimension of the transistor may be done using a well-known Spectre and optimizer simulator, where this translation is handled automatically by means of a script. Although it may seem redundant to first calculate the equivalent resistances of the power gating switch segments 32 and subsequently still optimize the actual W/L dimensions of these switches, it has been found that the calculation of these equivalent resistances achieves an accelerated convergence to the optimized W/L switch segment layout in the automated translation process due to the fact that the starting point of this translation process lies in the vicinity of the optimal geometry of the power gating switch segments 32.

If the dimensions (widths) of the various supply rails as well as their required separation distances in the technology of interest are known, the dimensions of the switches in each power gating switch segment 32 may for instance also be optimized using the power switch block generator disclosed in PCT application WO2009/144658 A1.

Alternatively, the respective dimensions of the individual power gating switch segments 32 may be optimized as previously explained, after which the switches of the individually optimized power gating switch segments 32 may be retrieved from a standard library. This is however a less preferred embodiment as it is unlikely that the standard library will comprise cells that can be accurately matched to the requirements of the specifications of the individual power gating switch segments 32 obtained in step 160.

After optimization of the dimensions of the individual power gating switch segments 32, the method of the present invention may proceed to step 170 in which the overall layout of the power gating switch arrangement 30 of selected power domain $40^1$ is generated and inserted into the layout of the IC to be designed. It may be checked if step 180 further power domains 40 require the optimization of their power gating switch arrangement 30. If this is the case, the method may revert to step 120. Otherwise, the method may terminate in step 190.

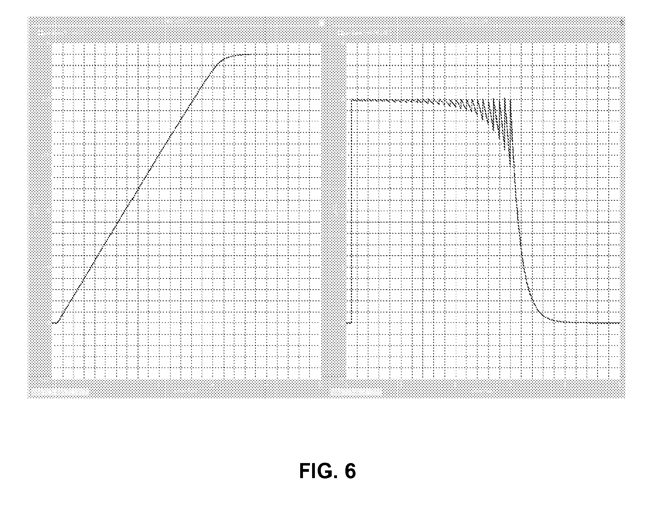

The effect of the optimized layout of the power gating switch segments 32 on the current profile generated by the power gating switch arrangement 30 of the selected power domain $40^1$ is shown in FIG. 6, in which the right panel depicts the current profile and the left panel depicts the ramp-up of the voltage on the virtual supply rail 34 of the selected power domain $40^1$. Compared to FIG. 5, it will be immediately apparent that the modulation building up on the current profile is much less pronounced, with the only residual modulation being caused by the approximation that the voltage on the virtual supply line 34 of the power domain 40 will increase in an exactly linear fashion over the whole start-up period of the power domain 40.

The method of the present invention is particularly suitable to be integrated in an electronic design automation (EDA) tool for designing a layout of an IC. To this end, computer program code may be provided in which the steps of the various embodiments of the method of the present invention are reproduced using suitable algorithms, such that upon execution of the computer program code on a computer processor, the computer processor executes the steps of the method of the present invention. The computer program product may be made available on any suitable computer-readable medium such as a CD-ROM, DVD, a portable flash memory such as a USB stick or a network-accessible storage device such as the hard disk of an Internet-accessible server.

As will be appreciated by the skilled person, the automated design of an IC is an involved process in which one or more CAD tools may be used to implement a number of conversion steps to convert a functional specification of an IC into an IC layout. A simplified non-limiting example of such a process is as follows. The conversion process typically comprises the transformation of the functional specification into a netlist in which technology-independent functional cells are interconnected, after which the netlist is converted into a technology-specific layout using building blocks by placing building blocks from a technology specific library into the layout based on the netlist specification.

The method of the present invention fits in the latter part of the design process. A problem with using standard library cells is that such cells are dimensioned such that they may be used in as many designs in the relevant technology as possible. In other words, the standard library cells are not optimized for individual circuit designs. In the method of the present invention, instead of automatically extracting power gating switch segments 32 from a standard library in the EDA process, the power gating switch segments 32 are dimensioned on-the-fly on the basis of the specifications of their power domain 40 and the PMU 10 as explained above such that during operation of the thus designed IC, the IC exhibits safe start-up behavior for its power domains 40 at a minimum start-up time.

An IC designed in accordance with the method of the present invention has a number of characteristic features. Primarily, the start-up current profile of a power domain 40 will have a substantially rectangular current profile as previously explained. Also, the respective power gating switch arrangements 30 of the power domains 40 can be recognized by comprising a plurality of power gating switch segments 32 separated by delay elements, with the different power gating switch segments 32 typically having different dimensions as explained in the context of step 160 of the embodiment of the method of the present invention shown in FIG. 4.

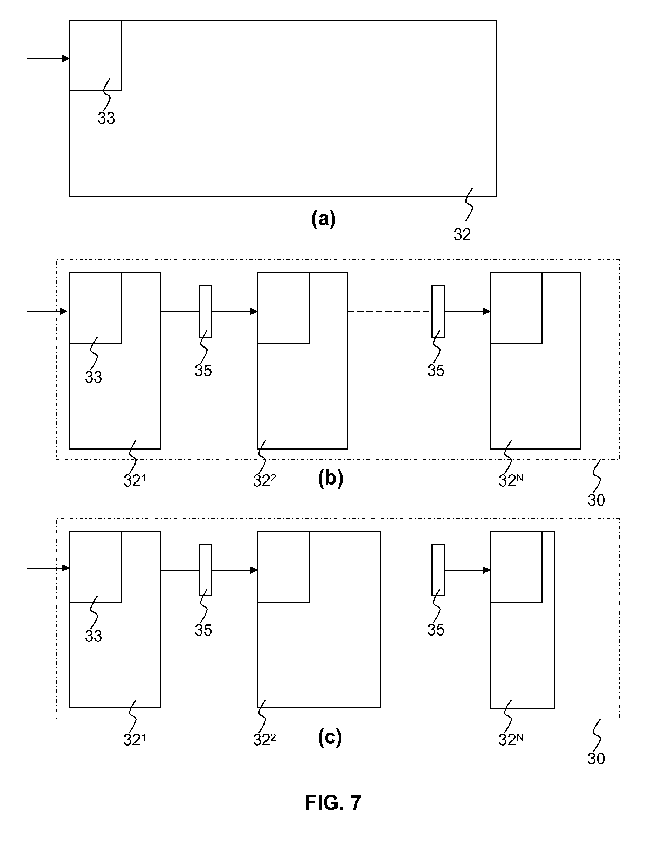

This is shown in more detail in FIG. 7, which depicts a prior art single segment-based power gating arrangement 30 including a driver 33 for the power gating switch segment 32 in panel (a), a prior art multiple-segment based power gating arrangement 30 including a driver block 33 in each segment 32, with each segment having an identical size and being separated by delay elements 35 in panel (b) and a power gating switch arrangement 30 designed in accordance with an embodiment of the present invention, in which the power gating switch segments 32 have different sizes and are separated by delay elements 35 to ensure that the start-up current profile of the associated power domain 40 has a substantially rectangular shape.

As will be recognized by the skilled person, the prior art arrangement shown in panel (a) is responsible for generating current profile A shown in FIG. 2, the prior art arrangement shown in panel (b) is responsible for generating current profile B shown in FIG. 2 and the power gating switch arrangement 30 in panel (c) is responsible for generating current profile C shown in FIG. 2.

Another important difference between the prior art multiple power gating switch arrangement in panel (b) and the power gating switch arrangement 30 of the present invention is that for the prior arrangement, the same equivalent resistance is used for all of the individual segments 32, which results in the parabolic-like current profile B. The direct consequence of this non-optimal use of the available current is that the number N of power gating switch segments 32 must be much larger to obtain the same maximum current peak as the power gating switch arrangement 30 obtained with the method of the present invention.

For instance, in the example specification used in the simulations depicted in FIG. 5 and FIG. 6, instead of 30 segments, the prior art power switch arrangement requires 120 segments to obtain the same maximum current of 4mA. This leads to a total wake-up time of $12\mu$s, which is 4 times larger than is obtainable with a power gating switch arrangement 30 designed in accordance with the method of the present invention.

It is pointed out that a power gating switch segment 32 designed in accordance with the method of the present invention may comprise multiple switches, which may be of different conductivity types. For instance, if the power gating switch segment 32 is a CMOS segment, it may comprise one or more pMOS and/or a nMOS transistors, which may be placed between the supply rail and the virtual supply rail or between the virtual ground rail and ground respectively. Other suitable implementations of such a power gating switch segment 32 will be apparent to the skilled person.

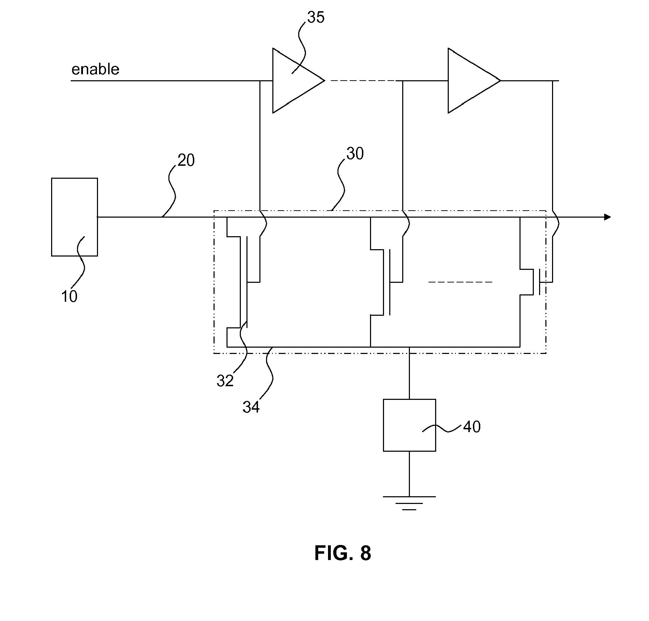

A non-limiting example of an IC designed with the method of the present invention is shown in FIG. 8. The IC comprises a PMU 10 that feeds a plurality of power domains 40 (only one power domain 40 is shown for the sake of clarity) via supply rail 20. At least some of the power domains 40 will have a virtual supply rail 34 connected to the supply rail 20 via a power gating switch arrangement 30 comprising a plurality of individually sized power gating segments 32 designed in accordance with the method shown in FIG. 4.

The plurality of individually sized power gating segments 32 are connected in parallel between the virtual supply rail 34 and the supply rail 20 but are sequentially enabled by an enable signal, a delayed version of which is provided by a chain of delay elements 35, with the control terminals of the respective power gating segments 32 connected to a different one of the delay elements 35. Not all power gating segments 32 require their control terminal to be connected to the enable signal via a delay element 35. For instance, in FIG. 8, the first of the power gating segments 32 is directly connected to the enable signal.

A single power gating switch arrangement 30 has been shown by way of non-limiting example only. The power domain 40 may also comprise a virual ground line (not shown), with a further power gating switch arrangement 30 connecting the virtual ground line to ground.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A computer-implemented method of generating an integrated circuit layout comprising a plurality of power domains (40) connected to a power supply (10) via respective arrangements (30) of power gating switch segments (32), comprising:

   determining the maximum current delivery capacity of the power supply (10);
   determining the maximum number of power domains (40) concurrently active during operation of the integrated circuit; and
   for a selected power domain (40), generating the layout of a power gating switch arrangement (30) as a function of the determined maximum current delivery capacity of the power supply (10) and the maximum number of concurrently active power domains (40).

2. The computer-implemented method of claim 1, wherein the step of generating the layout of the power gating switch arrangement (30) comprises determining the maximum inrush current available to the selected power domain (40) during its wake-up period, and designing the power gating switch arrangement (30) such that the inrush current has a substantially constant value during said wake-up period.

3. The computer-implemented method of claim2, further comprising:

   determining the number of power domains (40) that are simultaneously switched to an active state;
   determining a fraction of the maximum available inrush current by dividing the maximum available inrush current by said number of power domains(40); and
   designing the respective power gating switch arrangements (30) based on said fraction.

4. The computer-implemented method of claim 2 or 3, wherein the duration of said wake-up period is minimized as a function of the maximum available inrush current and the overall capacity of the selected power domain (40).

**5.** The computer-implemented method of any of claims 2-4, wherein:

said arrangement (30) comprises an array of N power gating switch segments (32) arranged in parallel between a supply line (20) connected to the power supply and an internal supply line (34) of the selected power domain (40), and at least one chain of delay elements (35), each gating switch segment (32) in said array having its control terminal connected to an output of a different one of said delay elements,; and
the step of optimizing the layout of said arrangement (30) comprises calculating the value of integer N.

**6.** The computer-implemented method of claim 5, wherein the step of calculating the value of integer N comprises calculating the value of integer N as a function of the wake-up time and the delay introduced by a single one of said delay elements (35).

**7.** The computer-implemented method of claim 5 or 6, further comprising:

estimating the equivalent resistance of each of the N power gating switch segments (32); and
determining the dimensions of said arrangement (30) from said estimated equivalent resistances.

**8.** The computer-implemented method of claim 7, wherein the step of determining the dimensions of said arrangement (30) comprises determining the individual dimensions of each of the N power gating switch segments (32) from their respective equivalent resistances.

**9.** The computer-implemented method of any of claims 2-8, wherein the step of determining the maximum inrush current comprises calculating said inrush current as a function of the minimum required voltage for ensuring data retention in the active power domains (40) and a specified current driving capability of the power supply (10).

**10.** The computer-implemented method of any of claims 1-9, further comprising providing a plurality of operation scenarios for said integrated circuit, each scenario identifying the power domains (40) active in said scenario, wherein the step of determining the maximum number of power domains (40) concurrently active during operation of the integrated circuit comprises:

selecting the scenarios in which the selected power domain (40) is identified as active; and
identifying the selected scenario having the highest number of active power domains (40).

**11.** A computer-readable medium comprising program code means for, when executed on a processor of a computer, implementing the steps of the method of any of claims 1-10.

**12.** An integrated circuit comprising a power supply (10) and a plurality of power domains (40), at least some of the power domains comprising an arrangement (30) of power gating switch segments (32) connecting the power domain (40) to the power supply, said arrangement (30) being **characterized in that** during a power-up mode of the power domain (40), said power domain draws a substantially constant current from the power supply (10).

**13.** The integrated circuit of claim 12, wherein the arrangement (30) of power gating switch segments (32) comprises:

an array of N power gating switch segments (32) arranged in parallel between a supply line (20) connected to the power supply and an internal supply line (34) of the selected power domain; and
a chain of N-1 delay elements (35), the $M^{th}$ gating switch in said array having its control terminal connected to the $M-1^{th}$ delay element, with M being a positive integer with $M \leq N$.

**14.** The integrated circuit of claim 13, wherein the power gating switch segments (32) in said array have different sizes.

**15.** An electronic device comprising the integrated circuit of any of claims 12-14.

**FIG. 1**

**FIG. 2**

**FIG. 3**

START — 110

SELECT POWER DOMAIN — 120

DETERMINE MAX. AVAILABLE INRUSH CURRENT — 130

DETERMINE OPTIMUM WAKE-UP TIME — 140

CALCULATE EACH EQUIVALENT POWER GATING SWITCH RESISTANCE — 150

OPTIMIZE EACH SWITCH LAYOUT USING CALCULATED EQUIVALENT RESISTANCE — 160

GENERATE POWER GATING SWITCH ARRANGEMENT LAYOUT — 170

190

END

ALL POWER DOMAINS DONE? — 180

**FIG. 4**

FIG. 5

FIG. 6

**(a)**

33

32

**(b)**

33    35    35

32$^1$    32$^2$    32$^N$

30

**(c)**

33    35    35

32$^1$    32$^2$    32$^N$

30

**FIG. 7**

**FIG. 8**

Europäisches
Patentamt

European
Patent Office

Office européen
des brevets

**EUROPEAN SEARCH REPORT**

Application Number

EP 10 15 5091

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAIJIAN SHI ET AL:  "Challenges in Sleep Transistor Design and Implementation in Low-Power Designs"<br>2005 43RD ACM/IEEE DESIGN AUTOMATION CONFERENCE, IEEE, PISCATAWAY, NJ, USA LNKD- DOI:10.1109/DAC.2006.229187,<br>24 July 2006 (2006-07-24), pages 113-116, XP010936313<br>ISBN: 978-1-59593-381-2<br>* the whole document *<br>----- | 1-15 | INV.<br>G06F17/50<br>H03K19/00 |
| X | US 2008/066035 A1 (ASAO KAZUKI [JP]) 13 March 2008 (2008-03-13)<br>* paragraph [0001] - paragraph [0016] *<br>----- | 1-15 | |
| X | US 2008/297063 A1 (WILLINGHAM DAVID JOHN [GB] ET AL) 4 December 2008 (2008-12-04)<br>* paragraph [0001] - paragraph [0042] *<br>----- | 1-15 | |
| X | US 2008/278194 A1 (KAMO ATSUSHI [JP] ET AL) 13 November 2008 (2008-11-13)<br>* paragraph [0002] - paragraph [0038] *<br>----- | 1-15 | TECHNICAL FIELDS SEARCHED (IPC)<br><br>G06F<br>H03K |

The present search report has been drawn up for all claims

| Place of search | Date of completion of the search | Examiner |
|---|---|---|
| Munich | 13 July 2010 | Anticoli, Claud |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 5091

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2010

| Patent document cited in search report | Publication date | Patent family member(s) | Publication date |
|---|---|---|---|
| US 2008066035 A1 | 13-03-2008 | JP 2008065732 A | 21-03-2008 |
| US 2008297063 A1 | 04-12-2008 | NONE | |
| US 2008278194 A1 | 13-11-2008 | CN 101304250 A<br>JP 2008283047 A | 12-11-2008<br>20-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009144658A1 A

### Non-patent literature cited in the description

- **A. CALIMERA et al.** *Proc. DATE conference 2008,* 2008, 973-980